# EUROPEAN PATENT APPLICATION

(11) **EP 1 322 005 A1**
(43) Date of publication of application: **25.06.2003**
(21) Application number: 01310590.3
(22) Date of filing: 19.12.2001
(51) Int. Cl.: H01S 3/30

(54) **Sources and methods of generating optical radiation**

(71) Applicant: UNIVERSITY OF SOUTHAMPTON, Southampton, Hampshire SO17 1BJ (GB)
(72) Inventor: Goncharenko, Igor, Highfield, Southampton SO17 1BJ (GB); Grudinin, Anatoly, Highfield, Southampton SO17 1BJ (GB); Nilsson, Johan, Highfield, Southampton SO17 1BJ (GB)
(74) Representative: Haines, Miles John

(57) **Abstract**

A source of optical radiation comprises an optical fiber Raman gain medium which is pumped by pump radiation comprising a plurality of spaced apart pump wavelength components. Raman cascading in the gain medium generates an optical output comprising a plurality of output wavelength components, each output wavelength component being derived from a pump wavelength component by one or more Raman shifts. Wavelength components intermediate in the cascade are resonated by use of fiber loops, fiber gratings or dichroic mirrors. Cascading may occur via Raman shifts corresponding to one or more peaks in the Raman gain spectrum of the optical fiber.

## Description

### BACKGROUND OF THE INVENTION

The invention relates to sources of optical radiation comprising Raman gain media, and to methods of generating optical radiation by utilizing Raman gain media.

Raman fiber amplifiers are extensively used in fiber optic telecommunications. They are typically made from silica fiber doped with germanium, and require pumping at relatively high pump powers. The Raman gain achievable in the amplifier can be generated at a wide variety of wavelengths and depends on the wavelength used to pump the amplifier. For telecommunications applications, amplification at 1550 nm is desirable, which can be achieved in germanosilicate fiber by pumping at 1450 nm. The germanosilicate Raman gain bandwidth of 300 cm⁻¹ (9 THz) thus gives an amplifier gain bandwidth of about 70 nm at these wavelengths.

It is desirable to increase the amplifier gain bandwidth. One way of doing so is to use multiple pump wavelengths, as each pump wavelength will generate its own gain centered at a particular wavelength, the bandwidths of which overlap to create a larger overall bandwidth. Hence the gain spectrum of the amplifier is broadened.

Previously proposed high power sources of multiple pump wavelengths comprise an array of two or more individual lasers, the outputs of which are coupled together to define a single pump source. WO 00/05622 [1] discloses an array of semiconductor diode lasers. US 6,122,298 [2] discloses a pair of sub-pump lasers having a combined power equivalent to that of the single pump laser they are intended to replace. Single mode diode lasers are available at the desired pump wavelength of around 1450 nm, and can give fiber-coupled power up to about 300 mW. However, although the cost of an individual laser is relatively low, the overall cost of a multiwavelength pump source is high when a large number of diode lasers is used. The output of the various diode lasers in the array can be combined into a fiber by wavelength multiplexing or coupling. However, the dense multiplexing or coupling needed is lossy. Losses can be 50% or higher. The percentage loss generally increases with the power output from the diode lasers. As a consequence of these power loss considerations, the power output required of the diode lasers increases supralinearly with power required at the output. A limitation is that diode laser cost increases supralinearly with power, so the overall cost of the source is driven up as more power is desired. A related limitation is that it is generally desirable to place isolators after the diode lasers, and isolators tend to become expensive and unreliable as the power specification is increased. Moreover, this design is not inherently protected against diode laser failure in that loss of one diode laser from the diode laser array will reduce the power after the multiplexer or combiner.

An alternative to the laser array is a cascaded Raman fiber laser (CRFL). A simple system can be pumped with an efficient high power ytterbium-doped fiber laser with an output around 1100nm, which, via a cascade of Raman wavelength shifts, gives a final single wavelength output around 1450 nm. However, CRFLs are costly, so that multiplexing a number of them together to create a multi-wavelength source is not cost-effective.

CRFLs can be used to generate multiple wavelengths directly, if they are provided with output couplers at one or more of the wavelengths corresponding to the Raman-shifted wavelengths through which the laser cascades. The power coupled out at these wavelengths is increased by resonating the wavelengths within the laser. EP 0,984,532 [3] proposes the use of refractive index gratings written into the optical fiber of the laser to achieve this, while WO 96/37936 [4] proposes optical fiber loops, each forming a resonator for a particular wavelength. However, there is little scope for adjusting the output of systems such as these, because the wavelengths produced all depend on the single pump wavelength.

### SUMMARY OF THE INVENTION

A first aspect of the present invention is directed to a source of optical radiation comprising:
a pump source operable to provide pump radiation comprising a plurality of pump wavelength components having respective wavelengths; and
an optical cavity comprising an optical fiber Raman gain medium arranged to receive the pump radiation and deliver an optical output comprising a plurality of output wavelength components, respective output wavelength components being derived from respective pump wavelength components by one or more Raman shifts.

Careful selection of the pump wavelength components can give a multi-wavelength optical output well-suited to achieve good performance from a Raman fiber amplifier pumped by the source. The multiple output wavelength components broaden the gain spectrum of the amplifier. In addition, the power of each pump wavelength component can be preselected, to give a desired power distribution between the various output wavelength components. As Raman gain is proportional to pump power, balancing of the power and wavelength of the output wavelength components in a careful manner can flatten or shape the gain achieved in the amplifier.

The properties of the optical output can therefore be largely controlled by selecting the properties of the pump wavelength components. Hence the control is performed at a point where the powers are low, which gives control with a low power loss. If any multiplexing is used to combine the pump wavelength components, this is also performed where powers are low, to reduce the impact of losses. This is in contrast to the laser array sources of the prior art, where multiplexing occurs where powers are high. Also, in the array sources, it is generally not practical to configure the powers of the individual laser diodes as for cost reasons these would typically be selected to operate at maximum power.

The prior art sources based on Raman cascade lasers do not permit much flexibility in configuring the spectrum or power of the optical output. Each output wavelength is derived from the same pump wavelength, so the range of outputs is constrained to be spaced apart by at least one Raman shift. Alteration of the single pump wavelength hence changes every output wavelength, so that no subtle adjustments can be made. Similar constraints apply to alteration of the power. The present invention addresses this by providing a plurality of pump wavelengths. This allows any selection of wavelengths to be generated via a Raman cascade, because any combination of pump wavelengths can be used.

Furthermore, providing a multiwavelength source based on optical fibers is advantageous in that the source is highly compatible with other fiber-based components such as Raman fiber amplifiers.

In an advantageous embodiment, the optical fiber Raman gain medium comprises material having a Raman gain spectrum with a plurality of peaks; and

Raman shifts corresponding to at least two of the peaks are used to derive the output wavelength components from the pump wavelength components.

This arrangement takes full advantage of the available Raman gain. It also permits generation of a greater variety of output wavelength components.

The optical cavity may be configured:
to resonate a plurality of intermediate wavelength components, each intermediate wavelength component being separated from at least one pump wavelength component and from at least one output wavelength component by one or more Raman shifts; and
to pass the output wavelength components through the optical fiber Raman gain medium more than once.

Resonating the intermediate components allows gain at these wavelengths to build up so that greater amounts of power at these wavelengths is produced. This in turn gives greater gain in the output wavelength components, the power of which is enhanced by multiple passes through the gain medium. Hence the output power is improved.

Resonance of the intermediate wavelength components may be achieved by arranging the optical fiber Raman gain medium in a first loop configured:
to receive the pump wavelength components;
to circulate the intermediate wavelength components a plurality of times; and
to deliver the output wavelength components to form the optical output.

The passing of the output wavelength components through the optical fiber Raman gain medium can be achieved by further arranging the optical fiber Raman gain medium in a second loop so as to receive the output wavelength components from the first loop, and configuring it to circulate the output wavelength components before delivering them to form the optical output.

Alternatively, the first loop may be configured to circulate the output wavelength components before delivering them to form the optical output.

In an alternative embodiment, the optical cavity comprises at least one pair of reflector elements disposed about the Raman gain medium, and operable to:
reflect one or more intermediate wavelength components such that the one or more intermediate wavelength components experience multiple passes through the Raman gain medium; and
reflect one or more output wavelength components such that the one or more output wavelength components experience multiple passes through the Raman gain medium.

The reflector elements may comprise optical gratings written into optical fiber. The gratings can be written directly in the fiber forming the Raman gain medium, which results in a simple cavity with a low number of components. Alternatively, the reflector elements may comprise dichroic mirrors provided at ends of sections of optical fiber coupled to the optical cavity by optical fiber couplers. Fused fiber wavelength division multiplexer couplers may be used for the coupling. Although multiplexers introduce loss, dichroic mirrors offer an advantage over gratings in that the reflectivity can have a broad bandwidth so that fewer mirrors are needed than gratings to reflect the same range of wavelengths.

According to one embodiment, the pump source comprises:
a plurality of lasers operable to generate outputs of respective wavelengths and powers; and
an optical coupler configured to receive and combine the outputs of the lasers to form the pump radiation.

The lasers can be selected to give any desired combination of pump wavelength components, each with a desired power, so that the overall spectrum of the optical output can be tailored for a particular application, such as pumping a particular Raman amplifier.

The pump source may further comprise an optical amplifier arranged after the optical coupler. The optical amplifier is thus operable to receive the pump wavelength components together and jointly amplify them.

The additional provision of an optical amplifier at this location is quite a subtle but ingenious modification which has a profound and unexpected effect on overall device design and performance.

First, the specification of a high power handling capability for the optical coupler is relaxed. High power handling for an arrayed waveguide grating (AWG), which is an example of a wavelength-sensitive optical coupler is difficult to achieve reliably at a sensible cost. Post-coupler amplification can reduce the power specification of the optical coupler significantly. For example, if 6W is needed after coupling, this may be provided in a conventional approach with five 2W diode lasers. With a 6W post-coupler amplifier, for example an Ytterbium-doped fiber amplifier (YDFA), 6W output can be achieved with 600 mW input. This input power can be provided comfortably by three 0.5W diode lasers driven below maximum power.

Second, higher losses in the coupler can be tolerated, since surplus power can be made available from the laser diodes without significant cost increase.

Third, since the coupler is handling much less power, its design considerations become less stringent.

Fourth, the design can provide inherent protection against pump failure, in other words against loss of one or more of the diode lasers, for example by active biasing of the optical amplifier with feedback.

Fifth, the cost of providing optical isolation is significantly reduced. Referring back to the specific example, if 2W per diode laser is provided, then it is probably not feasible with current technology and cost considerations to arrange a single 6W isolator after the coupling. Instead, individual 2W isolators would be needed, one in each diode laser channel prior to the coupler. By arranging an optical amplifier after the coupling, an isolator can be inserted after the coupler and before the amplifier. In the specific example, a single 1W isolator could be used. The system cost is thus significantly reduced, by reducing the number of isolators in the system, and at the same time system reliability is significantly increased in view of the fact that isolators become more unreliable with higher power, at least with current technology.

In summary, the provision of an optical amplifier after the optical coupling of the input wavelength components permits the Raman cascade to be pumped with pump radiation having a high power, to give a high power optical output, while allowing any adjustment to the input ("first") wavelength components to be performed at a lower power stage. Hence the impact of any loss arising from such adjustment is reduced.

In a preferred embodiment, the power and/or the wavelength of the outputs of the lasers can be varied, for example with a controller. This is advantageous in that the versatility of the source is increased; the wavelength and power spectra of the optical output can be varied at will, with no need to replace any part of the pump source.

The optical fiber Raman gain medium may comprise silica doped with phosphorus. Phosphosilicate has two peaks in its Raman gain spectrum which are spaced apart such that a variety of combinations of Raman shifts from each peak give output wavelength components of the same wavelength. Thus the available gain is greatly exploited.

A second aspect of the present invention is directed to a source of optical radiation comprising:
a pump source operable to provide pump radiation comprising a pump wavelength component;
a seed source operable to provide seed radiation comprising a plurality of seed wavelength components having respective wavelengths; and
an optical cavity comprising an optical fiber Raman gain medium arranged to receive the pump radiation and the seed radiation and to deliver an optical output comprising a plurality of output wavelength components, respective output wavelength components being derived from the pump wavelength component by one or more Raman shifts, each Raman shift producing an intermediate wavelength component, some of which correspond to the seed wavelength components.

This configuration offers similar advantages to that of the first aspect of the invention. It may prove more useful in certain situations, such as if a suitable plurality of wavelength components is more easily generated at intermediate seed wavelengths than around the pump radiation wavelength. The advantage of control being performed at a low power stage of the system is still retained.

The seed source may comprise:
a plurality of lasers operable to generate outputs of respective wavelengths and powers; and
an optical coupler configured to receive and combine the outputs of the lasers to form the seed radiation.

Also, it can be possible to vary the power and/or the wavelength of outputs of the lasers. As before, this gives a full adjustable optical output that can be modified as necessary.

In an embodiment, the optical fiber Raman gain medium comprises silica doped with phosphorus.

A third aspect of the present invention is directed to a method of generating optical radiation comprising a plurality of output wavelength components having respective wavelengths, the method comprising:
generating pump radiation comprising a plurality of pump radiation components having respective wavelengths;
introducing the pump radiation into an optical fiber Raman gain medium;
using one or more Raman shifts in the Raman gain medium to generate respective output wavelength components from respective pump wavelength components; and
extracting at least a portion of the respective output wavelength components from the Raman gain medium.

A fourth aspect of the present invention is directed to a method of generating optical radiation comprising a plurality of output wavelength components having respective wavelengths, the method comprising:
generating pump radiation comprising a pump wavelength component;
generated seed radiation comprising a plurality of seed radiation components having respective wavelengths;
introducing the pump radiation and the seed radiation into an optical fiber Raman gain medium;
using one or more Raman shifts in the Raman gain medium to generate from the pump wavelength component a plurality of intermediate wavelength components, some of which correspond to respective seed wavelength components, and using one or more Raman shifts in the Raman gain medium to generate respective output wavelength components from respective intermediate wavelength components; and
extracting at least a portion of each output wavelength component from the Raman gain medium.

### BRIEF DESCRIPTION OF THE DRAWINGS

For a better understanding of the invention and to show how the same may be carried into effect reference is now made by way of example to the accompanying drawings in which:
Figure 1 shows a plot of the Raman gain spectrum of germanosilicate;
Figure 2 shows a plot of the Raman gain spectrum of phosphosilicate;
Figure 3 shows a schematic depiction of cascades of wavelength shifts achievable in phosphosilicate;
Figure 4 shows a schematic diagram of a source of optical radiation according to an embodiment of the present invention;
Figure 5 shows a plot of a loss spectrum measured in a phosphosilicate fiber;
Figure 6 shows a schematic diagram of a second embodiment of a source of optical radiation;
Figure 7 shows a schematic diagram of a third embodiment of a source of optical radiation;
Figure 8 shows a schematic diagram of a fourth embodiment of a source of optical radiation;
Figure 9 shows a schematic diagram of a fifth embodiment of a source of optical radiation; and
Figure 10 shows a schematic diagram of a sixth embodiment of a source of optical radiation.

### DETAILED DESCRIPTION

The present invention utilizes the Raman effect. This effect is commonly known, but will be described here briefly to enhance understanding of the present invention.

Stimulated Raman scattering is a non-linear optical process commonly used in amplifiers and lasers based on optical fibers. The interaction of intense light with optical phonons in the glass of the fiber produces so-called Raman gain. The associated Raman effect leads to a transfer of energy from light at one wavelength to light at a second wavelength. This transfer results in a downshift in the energy/frequency (upshift in the wavelength), with the size of the shift determined by the energy of vibrational modes (phonons) of the glass. Hence, different types of glass produce different amounts of wavelength, or frequency, shift. It is possible to cascade a plurality of shifts one upon the other, to produce a large overall shift in wavelength. This cascade effect is commonly used in cascaded Raman fiber lasers, and is also exploited in the present invention.

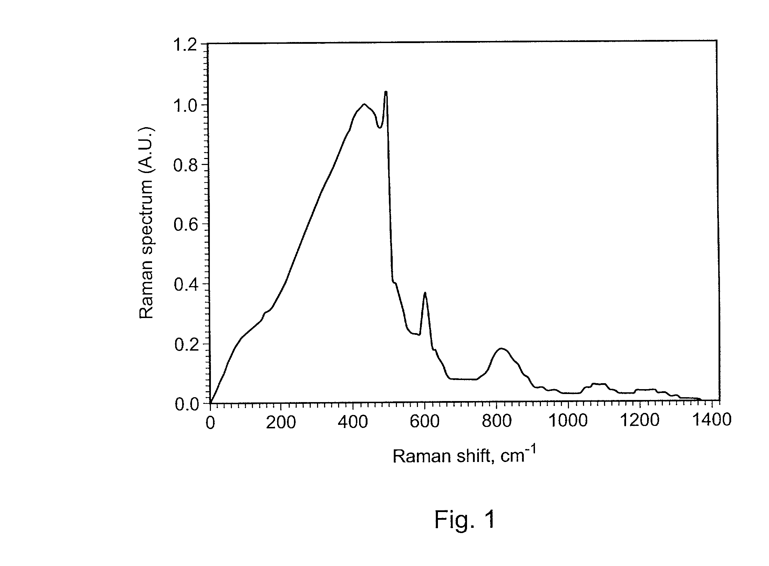

Figure 1 shows a plot of the Raman gain of germanosilicate fiber (silica fiber doped with germanium). The gain has a large peak centered at around 450 cm⁻¹ (13.5 THz), so that germanosilicate fiber is commonly used to produce Raman frequency shifts of this amount. The peak is relatively broad, having a bandwidth of around 300 cm⁻¹ (9 THz).

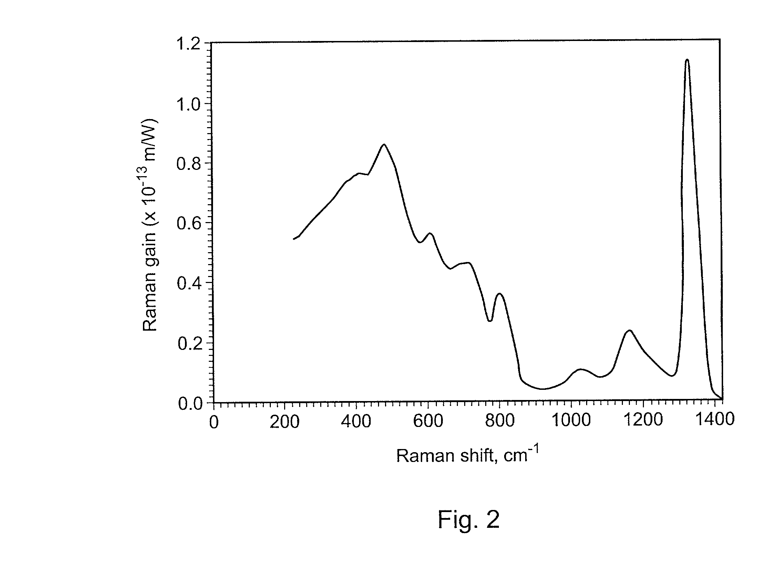

Figure 2 shows a plot of the Raman gain for phosphosilicate fiber (silica doped with phosphorus). Like germanosilicate, phosphosilicate has a broad gain peak centered at roughly 450 cm⁻¹ (13.5 THz). However, there is a larger and much narrower peak centered at 1330 cm⁻¹ (39.8 THz). The gain at 1330 cm⁻¹ (39.8 THz) relative to that at 450 cm⁻¹ (13.5 THz) depends on the amount of phosphorus in the fiber, and can therefore be engineered if necessary.

Cascaded optical systems in the prior art, such as lasers, commonly rely on a single cascade, in which a single pump wavelength is introduced and shifted in wavelength, or frequency, as many times as desired before being extracted from the system as a single frequency output.

The present invention seeks to provide a source with a multiwavelength output. It therefore exploits the novel idea of introducing light at multiple wavelengths at an early point in a Raman cascade, and using Raman gain and the Raman effect to shift the multiple wavelengths to give a high power multiple wavelength output. By introducing multiple wavelengths at or towards the beginning of a cascade, it is possible to make adjustments to power and wavelength without any resulting loss having a significant impact on the final multiple wavelength output. Such adjustment alters the spectral and power composition of the final output, which can hence be shaped in any way needed for a particular application.

Although germanosilicate fiber is commonly used in single frequency Raman cascaded systems, it is less suitable for the multiwavelength systems proposed herein. This is because of the large bandwidth of the gain peak, as shown in Figure 1. This means that the gain generated by a number of different yet closely spaced wavelengths in a multiwavelength input will overlap. Thus, each wavelength pumps all other lines in the multiwavelength beam. This makes control of the wavelength and power distribution of the final multiwavelength optical output potentially complex.

This limitation of standard germanosilicate fiber is addressed by using phosphosilicate fiber. As explained previously, the Raman gain in this material has a very large yet narrow peak at 1330 cm⁻¹ (39.8 THz). Hence phosphosilicate fiber can support Raman cascading of multiwavelength beams, as there is little scope for overlap in the gain, so that each wavelength cascades independently. Consequently, embodiments of the present invention described herein utilize phosphosilicate fiber.

An aim of the present invention is to produce a multiwavelength source at around 1450 nm, as this is a wavelength commonly required to pump the Raman fiber amplifiers used in telecommunication systems, which operate at wavelengths around 1550 nm.

Optical sources suitable for use as pump lasers in the present invention are readily available at wavelengths around 1050 nm. Therefore it is desirable to use Raman shifting to convert 1050 nm to the desired 1450 nm.

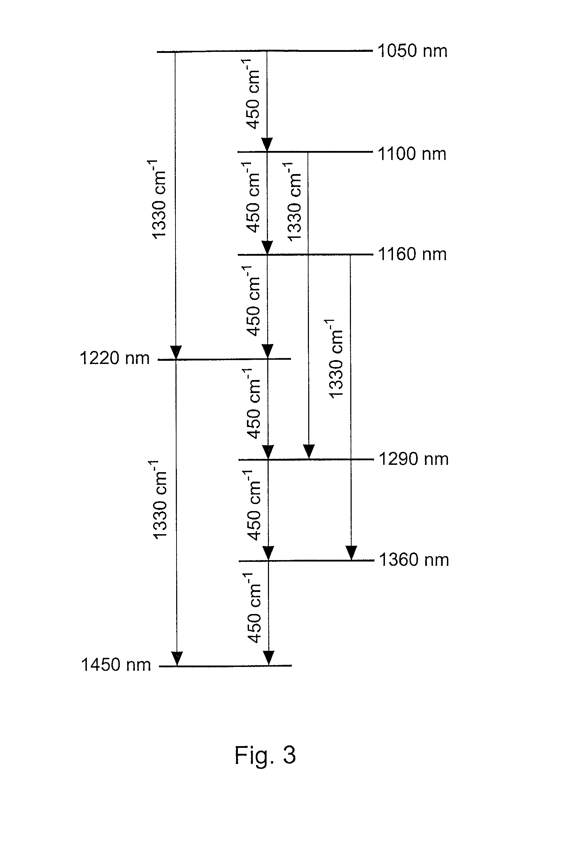

Figure 3 is a schematic diagram showing various combinations of Raman shifts in phosphosilicate which convert 1050 nm to 1450 nm. In particular the narrow gain at 1330 cm⁻¹ (39.8 THz) can be used to achieve the desired cascade in just two steps via an intermediate wavelength of 1220 nm. The diagram also indicates a number of other cascades which can used to produce 1450 nm, which take advantage of one or more shifts at the broad gain peak of 450 cm⁻¹ (13.5 THz).

### FIRST EMBODIMENT

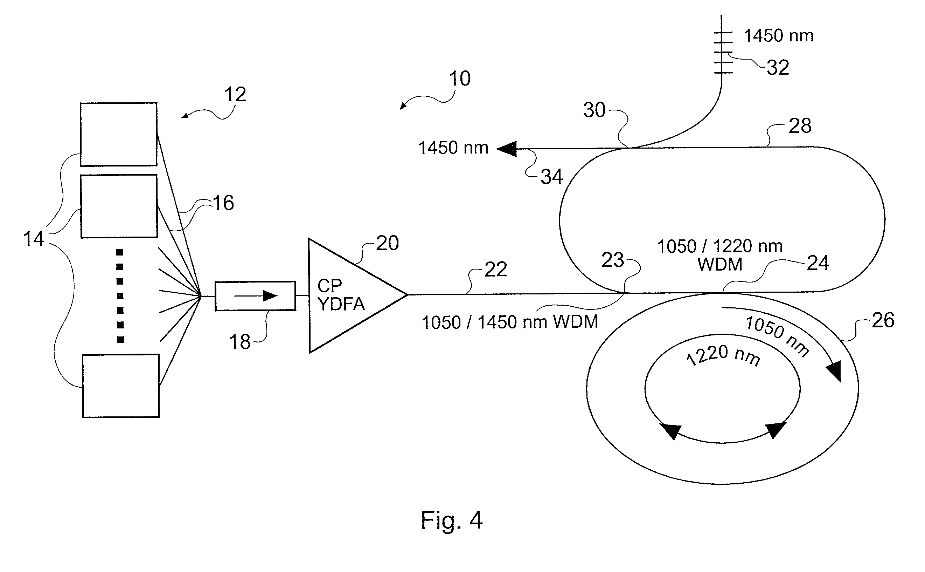

Figure 4 shows a schematic diagram of an embodiment of a source of optical radiation according to the present invention.

The optical source 10 comprises a pump source 12. The pump source 12 comprises a plurality, or array, of laser oscillators 14. Each of the laser oscillators 14 is configured to generate an output of optical radiation of a different wavelength, each of the different wavelengths being closely spaced around 1050 nm. The laser oscillators 14 may be any suitable type of optical source, such as diode lasers, fiber lasers or frequency-multiplied solid state lasers such as neodymium-doped yttrium-aluminum-garnet (Nd:YAG). The number of laser oscillators 14 used, and the wavelength spacing between the various outputs, will depend on the desired shape and bandwidth of the spectrum of the final optical output of the optical source 10.

Each laser oscillator 14 has an optical fiber 16 pigtailed to it which transmits its output to an optical coupler which acts as an isolator/optical combiner 18. The combiner may be wavelength-independent (e.g. a fused fiber coupler) or wavelength-dependent (e.g. an AWG). The latter typically has a lower insertion loss, so a lower Raman gain or lower powered laser oscillators 14 may be tolerated. On the other hand, a wavelength-independent combiner may be more suitable if extensive tuning of the laser oscillators 14 is contemplated.

The output of the combiner 18 is passed via a fiber to an optical amplifier 20. The amplifier 20 is a high power cladding-pumped ytterbium-doped fiber amplifier. This type of amplifier operates well at 1050 nm. However, other types of amplifier suitable for amplification of the pump wavelength may be used instead. The purpose of the amplifier 20 is to increase the power of the combined outputs of the laser oscillators 14 so that the final output of the Raman cascade is of a sufficiently high power. By providing amplification at this point in the system, it is possible to adjust the powers and wavelengths of the laser oscillators 14 at a low power stage, which minimizes the impact of such adjustment on the operation of the rest of the optical source 10. Moreover, it is possible to adjust the power output from the laser oscillators 14 to adjust the power spectrum output from the amplifier and subsequent components without power penalty.

The output of the amplifier 20 forms the final output of the pump source 12 and hence delivers pump radiation comprising a plurality of pump wavelength components. This pump radiation is fed via an optical fiber 22 into the main part of the optical source 10. This is the optical cavity in which the Raman cascading takes place.

The fiber 22 leads to an optical coupler in the form of a first fused taper wavelength division multiplexer (WDM) coupler 23 which is configured to pass light at 1050 nm and divert light at 1450 nm. This first WDM coupler 23 is followed by a second WDM coupler 24, configured to pass 1050 nm and reflect 1220 nm. The second WDM coupler 24 leads to a closed loop of phosphosilicate optical fiber 26 which forms the Raman gain medium of the optical source.

A second loop 28 of conventional silica(te) transmission fiber is situated on the opposite side of the first and second WDM couplers 23, 24 to the Raman gain loop 26. The second loop 28 could in principle be made of phosphosilicate fiber, but this is not necessary, since its purpose is not to provide gain. The second loop 28 comprises an output coupler 30, in the form of a fused taper WDM coupler configured to be partially transmitting at 1450 nm. One arm of the output coupler 30 contains a fiber grating 32 configured to reflect light at 1450 nm, whilst a further arm 34 of the output coupler 30 delivers the final optical output of the optical source 10.

Operation of the optical source 10 is as follows: the lasers oscillators 14 are each selected or configured to generate light at a particular wavelength and particular power level. The oscillators 14 may be tunable and have adjustable output powers. This allows the final output of the optical source 10 to be modified, as the output depends on the pump radiation in a manner which will become apparent. Alternatively, the laser oscillators 14 may be preselected to give a particular combination of wavelengths and powers. The outputs of the laser oscillators 14 pass through the optical fibers 16 and are combined in the combiner 18, before being passed to the amplifier 20 for amplification. The combined and amplified multiwavelength pump radiation passes through the first WDM coupler 23, and reaches the second WDM coupler 24, where it is diverted into the Raman gain loop 26. The 1050 nm light generates Raman gain in the phosphosilicate fiber at 1220 nm via the 1330 cm⁻¹ (39.8 THz) gain peak, as well as at 1100 nm via the 450 cm⁻¹ (13.5 THz) gain peak. The loop 26 and second WDM coupler 24 are configured such that the 1220 nm light stays in the loop 26 and circulates in both directions while the pump light at 1050 nm propagates once around the loop 26 before leaving it, as indicated by the arrows in Figure 4. Thus, the loop 26 has low loss as 1220 nm, so that power can build up at this wavelength. Hence the multiwavelength pump beam at 1050 nm generates an intermediate multiwavelength beam comprising a plurality of wavelength components around 1220 nm. Each intermediate component arises from one pump wavelength component.

The 1100 nm light from the 450 cm⁻¹ (13.5 THz) gain peak is not required for the Raman cascade, so the loop 26 is configured to be at high loss at this wavelength to prevent the build-up of unwanted radiation. This may be simply arranged. Losses in phosphosilicate fiber are significantly higher at 1100 nm than at 1220 nm. Hence, there may be sufficient loss within the Raman gain loop 26 to suppress oscillation at 1100 nm. Alternatively the second WDM coupler 24 may be configured to introduce into the loop 26 an additional loss at 1100 nm. For example, a WDM coupler made from fused fibers typically has sinusoidal cross-coupling characteristics, which in this case are between 1050 nm and 1220 nm. Thus the coupler will have a loss of around 75%, or 6dB, at 1100 nm. This is typically a sufficiently high loss to suppress the build-up of light at 1100 nm, so that light at 1220 nm can increase in power instead.

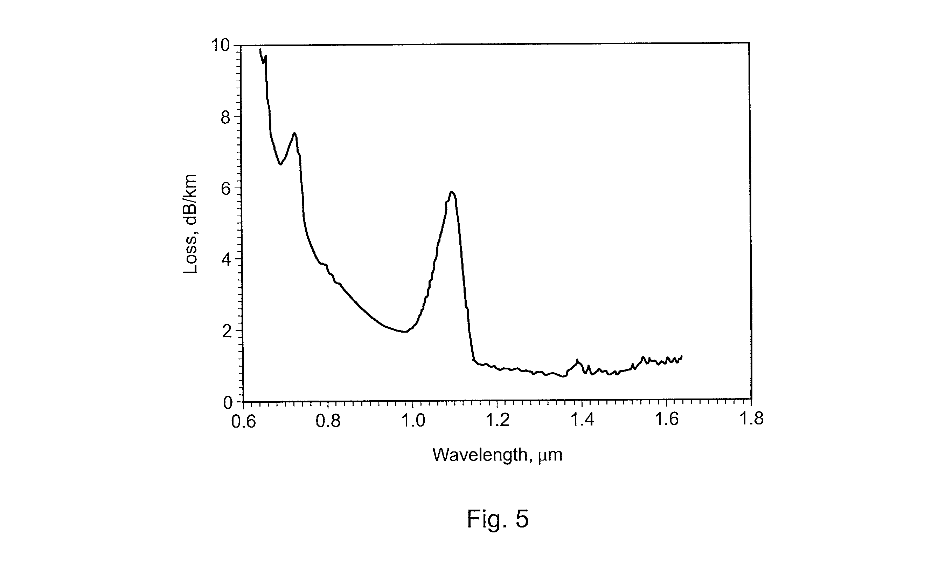

Figure 5 shows a plot of the variation of loss with wavelength for a phosphosilicate fiber. This illustrates the much greater loss present at 1100 nm at 1220 nm.

The light at 1220 nm circulating in the Raman gain loop 26 in its turn creates Raman gain at 1450 nm, via the 1330 cm⁻¹ (39.8 THz) gain, as well as at 1290 nm via the 450 cm⁻¹ (13.5 THz) gain. The second WDM coupler 24 is configured to introduce significant out-coupling into the Raman gain loop 26 at 1450 nm. Hence light at this wavelength is coupled out of the loop 26. In contrast, the loss around 1290 nm is likely to be small, since this wavelength is close to the 1220 nm which the loop is designed to resonate. This can lead to build-up of light at 1290 nm instead of the desired 1450 nm. Therefore, to ensure sufficient feedback to allow light to build up at 1450 nm, the second loop 28 is used to provide feedback at 1450 nm. The 1450 nm light generated from the intermediate 1220 nm light passes through the second WDM coupler 24 and into the second fiber loop 28. The second loop 28 ensures a high level of feedback at 1450 nm, independently of the characteristics of the second WDM coupler 24. The output coupler 30 transmits a portion of the light at 1450 nm, whilst allowing the remaining light to circulate around the second loop 28, and increase in power owing to the Raman gain. The fiber grating 32 reflects the light at 1450 nm, and therefore ensures unidirectional circulation around the loop 28, so that the output leaving the arm 34 is unidirectional.

A dichroic mirror may be used in place of the fiber grating 32. It may be difficult or costly to make a fiber grating with a sufficiently broad reflection bandwidth to reflect all of the multiwavelength light at 1450 nm, where as a dichroic mirror can be made with a sufficiently broad bandwidth for use in such a situation.

The output coupler 30 and the second WDM coupler 24 may be configured to have high loss at 1290 nm, to suppress oscillation of this unwanted wavelength. Additional optical elements may also be introduced to suppress oscillation at 1290 nm, to ensure that maximum output is achieved at 1450 nm. This may be necessary if the output coupling at 1450 nm provided by the output coupler 30 is very large. Output coupling up to around 50% is likely to be tolerable without the need for additional loss to be introduced at 1290 nm. However, the precise situation will depend on the amount of gain at 1330 cm⁻¹ (39.8 THz) relatively to the gain at 450 cm⁻¹ (13.5 THz), which in turn depends on the amount of phosphorous doping in the Raman gain fiber 26.

Therefore, the optical source 10 produces a multiwavelength optical output around 1450 nm, from a multiwavelength pump input around 1050 nm. Modification of the power and/or wavelength of one or more of the laser oscillators 14 has an impact on the final output at 1450 nm, because each of the first wavelength components from the pump source 12 generates a single second wavelength component in the final optical output, via intermediate wavelengths of the Raman cascades. In this way, the optical output at 1450 nm can be shaped and modified as required for its intended use, such as the pumping of a Raman fiber amplifier.

Preferably, the source should be configured to be as low loss as possible. Losses can arise from a number of components, including splices connecting sections of fiber, gratings, and propagation loss in the fiber itself. The fiber loss is partly unavoidable, and depends partly on fiber parameters such as mode area. Therefore, losses from other causes should preferably be made as low as possible, to minimize overall loss. Reflection losses in gratings, and splice losses, can be less than 1% (0.05dB) if the grating or splice is fabricated to a high standard. It may also be possible to avoid splicing altogether. For example, the WDM couplers may typically be fused fiber couplers, which can be made to have very low excess loss. The couplers may be spliced onto the phosphosilicate fiber, or fabricated directly in the phosphosilicate fiber, which further reduces losses by eliminating splices.

As an alternative to using an array of lasers to provide the pump wavelength components, the pump source may instead comprise a broad-band source of amplified spontaneous emission, such as an edge-emitting light emitting diode (LED). To obtain control of the power distribution of the final output of the optical source, the output of the LED can be separated into different spectral components by passing it through an arrayed waveguide grating (AWG), concave grating demultiplexer, or other demultiplexing device, and recombined in a corresponding multiplexer. The separated components can be attenuated as desired to give a particular spectrum to the multiwavelength pump radiation, which in turn generates a particular output spectrum.

### SECOND EMBODIMENT

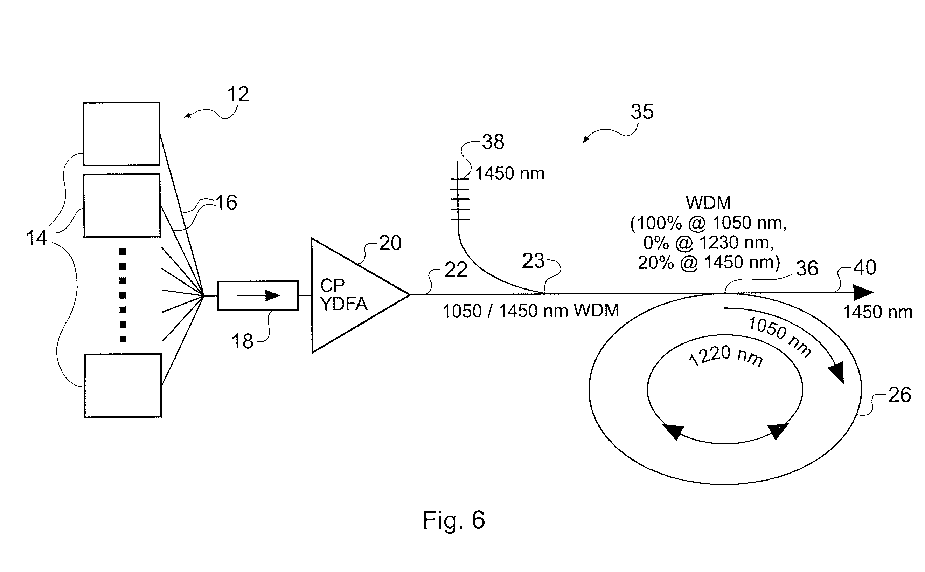

Figure 6 shows a schematic diagram of a further embodiment of an optical source, which has a number of features in common with the optical source 10 depicted in Figure 4. Consequently, like features are labeled with like reference numerals in these two Figures.

The present embodiment differs from the Figure 4 embodiment in that no second loop 28 is provided to allow build-up of light around 1450 nm. Instead, the pump radiation is coupled into the Raman gain loop 26 by means of a second WDM coupler 36 which is configured to have high transmission at the pump wavelength of 1050 nm, low transmission at the intermediate wavelength of 1220 nm, and partial transmission, in this case 20,% at the output wavelength of 1450 nm (see device specification shown in Figure 6). Additionally, the source of Figure 6 differs in that a fiber grating 38 providing reflection at 1450 nm is provided in an arm of the first WDM coupler 23, and an output fiber 40 to transmit the output at 1450 nm is provided after the second WDM coupler 36.

The optical source 35 of Figure 6 operates in largely the same manner in the optical source 10. However, when radiation at the intermediate wavelength of 1220 nm circulating in the Raman gain loop 26 produces gain at 1450 nm, the light subsequently generated at 1450 nm does not all pass out of the Raman gain loop 26. Instead, the 20% transmission at 1450 nm of the second WDM coupler 36 ensures that a sufficient quantity of radiation at 1450 nm remains circulating within the Raman gain loop 26 and consequently increases in power owing to the gain at this wavelength. The second WDM coupler 36 transmits only 20% of radiation circulating at 1450 nm; this forms the output of the optical source 35. Light at 1450 nm leaves the Raman gain loop 26 in both directions via the WDM coupler 36. Therefore some of it propagates directly to the output fiber 40. Light leaving the Raman gain loop 26 in the opposite direction, however, is diverted at the first WDM coupler 23 to the optical grating 38 where it is reflected back towards to the output fiber 40, where it is delivered as the final optical output at 1450 nm. Hence, the grating 38 ensures that the multiwavelength optical output is unidirectional.

The configuration of the optical source 35 is clearly somewhat simpler than that of the optical source 10, in that only one loop of fiber is required. However, the second WDM coupler 36 has a more demanding specification than the second WDM coupler 24 used in the optical source 10, as it is configured for three wavelengths rather than two. It can be more difficult and more costly to manufacture a WDM coupler with this complex specification to give optimum performance.

### THIRD EMBODIMENT

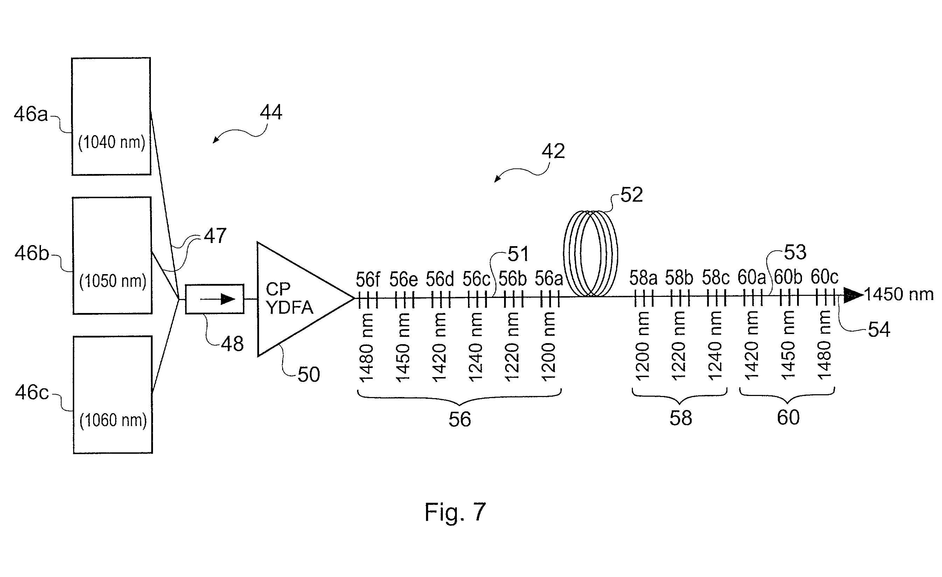

Figure 7 shows a schematic diagram of a further embodiment of an optical source. This embodiment utilizes reflector elements in the form of fiber gratings to provide feedback at various intermediate and output wavelengths.

The optical source 42 comprises a pump source 44, having three laser oscillators 46. Each oscillator 46 generates a particular wavelength close to 1050 nm. Specifically, laser oscillator 46a generates 1040 nm, laser oscillator 46b generates 1050 nm and laser oscillator 46c generates 1060 nm. The use of three lasers is exemplary only; a different number of laser oscillators may be used if required. Each of the laser oscillators 46 has an optical fiber 47 to carry its output to an optical isolator and combiner 48. The output of the combiner 48 is passed to a cladding-pumped ytterbium-doped fiber amplifier 50. The laser oscillators 46, the combiner 48 and the amplifier 50 together comprise the pump source 44, the final output of which forms pump radiation with multiple wavelength components. The output of the amplifier is coupled to a first fiber section 51, which has six high reflecting optical fiber gratings written into it. The fiber 51 may be phosphosilicate. A further, longer, section of fiber 52 is coupled to the first fiber section 51. The fiber 52 is phosphosilicate fiber and forms the Raman gain medium for the optical source 42. The far end of the Raman gain fiber 52 is coupled to a second fiber section 53 the far end 54 of which forms the output of the optical source 42. The second section of fiber 53 is provided with three high reflecting fiber gratings 58 and three partially reflecting fiber grating output couplers 60.

Each of the fiber gratings 56 in the first section of fiber 51 is paired with a grating 58, 60 in the second section of fiber 53. The three gratings 56a, 56b, 56c in the first fiber section 51 which are closest to the Raman gain fiber 52 are paired with the high reflecting grating 58a, 58b, 58c which are situated between the Raman gain fiber 52 and the output coupling gratings 60. One pair of gratings 56a, 58a are configured to be highly reflecting at 1200 nm, one pair 56b, 58b at 1220 nm and one pair 56c, 58c at 1240 nm. These three pairs of gratings hence define three resonant cavities corresponding to the intermediate wavelength components to be generated from each pump wavelength component. Each cavity contains the Raman gain fiber 52.

The remaining high reflectors 56d, 56e, 56f in the first section of fiber 51 are located immediately following the amplifier 50. One of these gratings 56d is highly reflecting at 1420 nm, one 56e at 1450 nm and one 56f at 1480 nm. These grating are each paired with an output coupling grating 60 are located in the second section of fiber 53, immediately preceding the output fiber end 54. These three pairs of gratings hence define partially resonant cavities at wavelengths around 1450 nm, each containing the Raman gain fiber 52. The output coupling gratings 60 may be configured to have any level of transmission, depending on the threshold, cavity losses and desired operating output power, but are suitably between 20% and 90%, more preferably 30% to 70%, still more preferably 40% to 60%. Around 50% is considered optimum. Moreover, they need not all have the same percentage transmission. The output coupling therefore provides a further way of modifying the final optical output, in addition to tuning the wavelength and/or power of the laser oscillators of the pump source.

In operation, each of the laser oscillators 46 generates its output, the three of which are combined by the combiner 48 and passed to the amplifier 50 where the powers are amplified. The final amplified output of pump radiation, with three pump wavelength components, then propagates through the high reflector gratings 56 and into the Raman gain fiber 52. Each wavelength component of the multiwavelength pump radiation then generates Raman gain in the Raman gain fiber 52, each at slightly different wavelength, namely 1200 nm, 1220 nm and 1240 nm. These wavelength shifts arise from the 1330 cm⁻¹ (39.8 THz) Raman gain peak. Because this peak is narrow, the Raman effect occurs largely independently for each of the three pump wavelength components. Thus, each of these intermediate wavelength components, 1200 nm, 1220 nm and 1240 nm, resonates in its own cavity defined by the relevant pair of gratings 56, 58. A further Raman shift then occurs from each of these intermediate wavelength components, to form three output wavelength components centered around 1450 nm, specifically at 1420 nm, 1450 nm and 1480 nm. The partially resonant cavities at these wavelengths formed by gratings 56, 60 allow these wavelengths to experience multiple passes through the Raman gain fiber 52 and hence to increase in power. Part of each of these wavelength components is transmitted through the output couplers 60, to leave the cavity through the output end 54. The final optical output therefore comprises three wavelength components. Alteration of the power of the laser oscillators 46 will alter the powers of the corresponding output wavelength component, so that the overall output spectrum may be modified as regards the power distribution between the various wavelength components.

An advantage of the optical source embodiment 42 is that there is no feedback at unwanted wavelengths arising from 450 cm⁻¹ (13.5 THz) shifts, because the feedback is precisely determined by the reflectivity of the gratings provided. The reflectivity bands for such gratings are typically narrow, and are selected to carefully match the wavelengths corresponding to the various stages of the 1330 cm⁻¹ (39.8 THz) Raman cascade starting from the particular selected pump wavelengths. Therefore, any unwanted wavelengths generated via the 450 cm⁻¹ (13.5 THz) Raman gain peak are readily suppressed, so that maximum amount of gain is available at the desired wavelengths. A potential disadvantage, however, is that it is necessary to provide specific gratings at intermediate wavelengths in the Raman cascade corresponding to every input pump wavelength, owing to the narrow band response of the gratings. If a large number of laser oscillators are used in order to give a broad or detailed spectrum to the final optical output, a large number of gratings will need to be provided. This may make the optical source 42 undesirable costly and complex.

Despite the narrow band response of the gratings, a small amount of interaction between different lines of the cascade may occur. For example, there is likely to be some scattering from the wavelength component at 1200 nm to the component at 1240 nm, arising from the very broad gain peak centered at 450 cm⁻¹ (13.5 THz). This can be addressed by using a lower pump power at 1060 nm than at 1040 nm. Hence more light is generated at 1200 nm initially, from the 1040 nm pump component, so that any loss via scattering to 1240 nm is balanced. Alternatively or additionally, it is possible to arrange the gratings so that the cavity defined by the gratings reflecting at 1240 nm does not incorporate the whole of the Raman gain fiber 52, but only a fraction of it. In this way, the light at 1240 nm will experience less gain, which is balanced by light scattered to 1240 nm from 1200 nm. Hence it is possible to reduce the effect of intraband Raman scattering.

Regarding the construction of the fiber components of optical source 42, it is possible to write the gratings directly into respective ends of the Raman gain fiber 52. Alternatively, the gratings may be written in separate sections of fiber, which may or may not contain phosphorus, and then spliced onto the Raman gain fiber 52. However, any fiber splices of this kind will introduce loss into the system, so it is desirable to keep the number of splices to a minimum.

### FOURTH EMBODIMENT

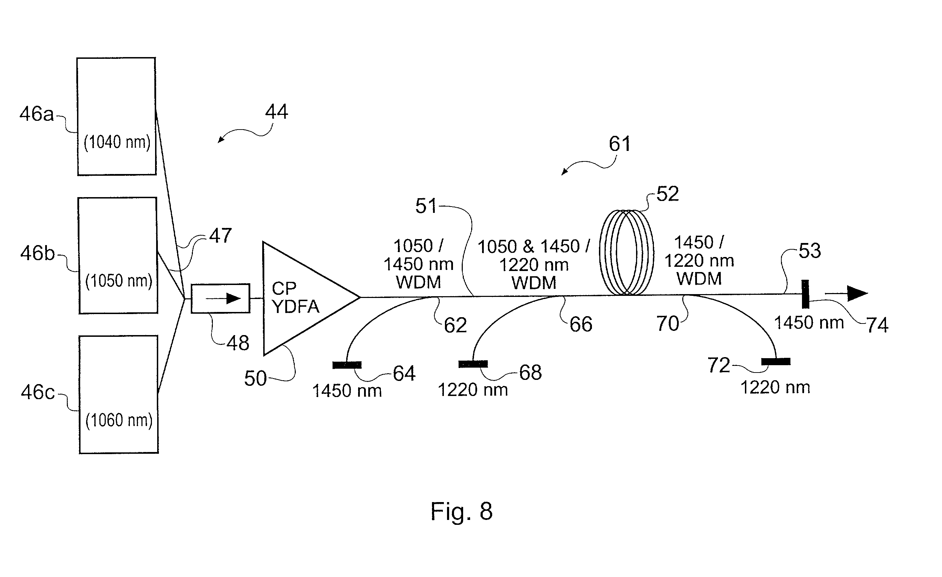

Figure 8 shows a schematic diagram of a further embodiment of an optical source, which like optical source 42, uses reflector elements to provide feedback at various wavelengths. Components in common with optical source 42 are labeled with like reference numerals.

The pump source 44 for the optical source 61 shown in Figure 8 is the same as that included in optical source 42. Thus the pump radiation produced by the pump source 44 contains three pump radiation wavelength components, at 1040 nm, 1050 nm and 1060 nm.

The optical source 61 differs from the optical source 42 in that the fiber gratings 56, 58, 60 are replaced with broad band dichroic mirrors 64, 68, 72, 74. The dichroic mirrors have a much wider reflective response than the gratings, so that a single pair of mirrors with reflectivity centered at 1220 nm performs the equivalent function to three pairs of gratings centered at 1200 nm, 1220 nm and 1240 nm. Similarly, the gratings centered at 1420 nm, 1450 and 1480 nm in the optical source 42 are replaced in the optical source 61 by a single pair of mirrors centered at 1450 nm. One of the 1450 nm mirrors is partially reflecting and acts as an output coupler to deliver the final optical output of the optical source 61.

Each dichroic mirror is fabricated directly on to one end facet of a section of optical fiber, with each section of fiber being coupled to the Raman gain fiber 52 by a WDM coupler. A first WDM coupler 62 is provided adjacent to the amplifier 50, and couples light to a mirror 64 which is highly reflecting at 1450 nm. Hence the first WDM coupler 62 can transmit at 1050 nm but diverts light at 1450 nm to the mirror. A second WDM coupler 66 is located between the first WDM coupler 62 and Raman gain fiber 52, and couples a dichroic mirror 68 which is highly reflecting at 1220 nm. The second WDM coupler 66 is configured to pass light at 1050 nm and 1450 nm, and to divert light at 1220 nm to the dichroic mirror 68. A further 1220 nm dichroic mirror 72 is provided on the downstream side of the Raman gain fiber 52 and is coupled via a third WDM coupler 70 which is operable to pass light at 1450 nm and divert light at 1220 nm to the mirror 72. Finally, the 1450 nm output coupling mirror 74 is provided at the far end of the fiber system.

As in the optical source 42, operation of the optical source 61 relies on the generation of Raman gain around 1220 nm from each of the pump wavelength components. The 1220 nm high reflector dichroic mirrors 68, 72 form a resonant cavity containing the Raman gain fiber 52 so that the intermediate wavelength components generated around 1220 nm experience multiple passes through the fiber 52. The second and third WDM couplers 66, 70 ensure that these wavelength components resonate within the optical cavity defined by the mirrors 68, 72. Each of the intermediate wavelength components generates Raman gain at wavelengths around 1450 nm. These wavelength components resonate within the cavity defined by the two 1450 nm mirrors 64, 74 and hence have an opportunity to build up owing to multiple passes through the Raman gain fiber 52. However, the output coupler 74 couples light at these wavelengths out of the optical source 61, to form the multiwavelength final optical output.

The optical source 61, using broadband dichroic mirrors, is in some respects advantageous over the optical source 42 using optical gratings, because the broadband response of the mirrors allows a certain flexibility in the choice of pump wavelength components, and also allows the output wavelength to be tuned to some extent by tuning of the pump wavelength components. The pump wavelength components may be tuned by as much as is permitted by the broadband response of the relevant dichroic mirrors. However, unlike the optical source 42, the optical source 61 comprises a number of optical coupling devises, in this case WDM couplers, to divert the light to the various mirrors. Optical couplers introduce loss into the system. Therefore the tunability and broadband response of an embodiment using dichroic mirrors needs to be balanced against the lower loss yet poorer tunability of an embodiment using gratings such as the optical source 42.

### FIFTH EMBODIMENT

The embodiments of the present invention described so far have each exploited the 1330 cm⁻¹ (39.8 THz) Raman gain peak in phosphosilicate, and have sought to suppress or avoid unwanted wavelengths arising from the smaller Raman gain peak at 450 cm⁻¹ (13.5 THz). This approach gives a simple Raman cascade in which the interaction between different wavelength components is small as they are converted through the cascade. On the whole, each of the cascades from the pump wavelength components to the corresponding output wavelength component occurs independently. Whilst this approach is simple, a drawback is that the conversion efficiency of the source as a whole drops when the number of wavelength components increases, since each component needs to reach gain threshold essentially independently. An alternative approach is to include cascades using the smaller 450 cm⁻¹ (13.5 THz) Raman gain peak. Referring back to Figure 3, it can be seen that a cascade of six Raman shifts based on the 450 cm⁻¹ (13.5 THz) gain peak are roughly equivalent to two Raman shifts based on the 1330 cm⁻¹ (39.8 THz) gain peak, in converting 1050 nm radiation to 1450 nm radiation.

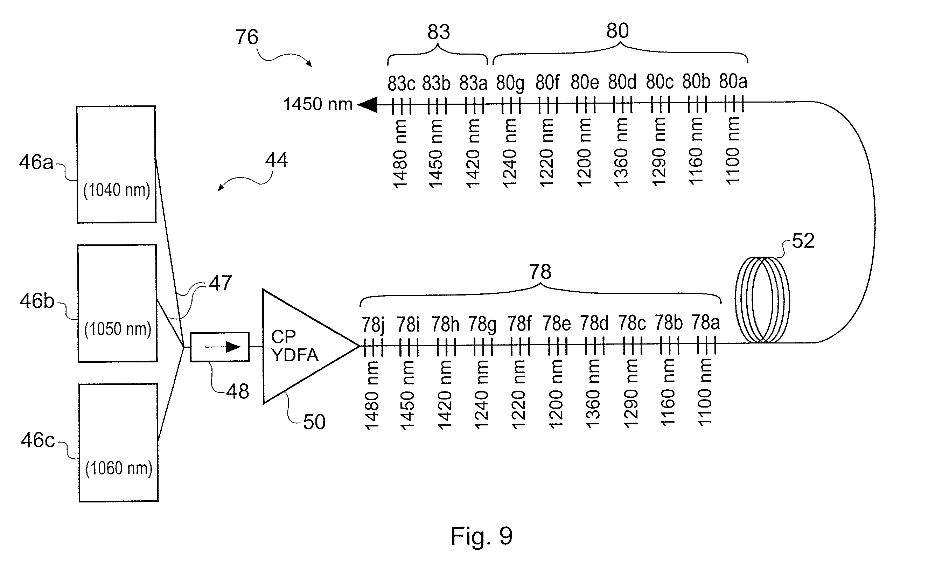

Figure 9 shows an embodiment of an optical source using fiber gratings to provide feedback at the various wavelengths which exploits this additional Raman cascade. The optical source 76 is broadly similar to the optical source 42 shown in Figure 7. However, additional pairs of high reflector optical gratings 78, 80 are provided at each of the wavelength steps in the 450 cm⁻¹ (13.5 THz) cascade shown in Figure 3. In other words there are pairs of gratings surrounding the Raman gain fiber 52 having reflectivities at 1100 nm (78a, 80a), 1160 nm (78b, 80b), 1290 nm (78c, 80c), and 1360 nm (78d, 80d). The wavelength resulting from the third Raman shift, 1220 nm, corresponds to the first shift in the 1330 cm⁻¹ (39.8 THz) Raman cascade, for which a grating pair 78f, 80f is otherwise provided. High reflector grating pairs at 1200 nm (78e, 80e) and 1240 nm (78g, 80g) corresponding to those in optical source 42 are also provided as are high reflector gratings paired with output couplers at the final output wavelengths of 1420 nm (78h, 83a), 1450 nm (78i, 83i) and 1480 nm (78j, 80j).

Operation of the optical source 76 is as follows: the multiwavelength pump radiation having wavelength components at 1040 nm, 1050 nm and 1060 nm produced by the pump source 44 is introduced into the fiber part of the source 76. The pump radiation propagates through the initial high reflector gratings 78 to the Raman gain fiber 52. The multiwavelength pump radiation around 1050 nm generates Raman gain around 1220 nm from the 1330 cm⁻¹ (39.8 THz) shift, as well as around 1100 nm from the 450 cm⁻¹ (13.5 THz) shift. The 10 nm wavelength separation of the components of the pump radiation is sufficiently large that the gain spectra generated around 1220 nm do not overlap substantially. In contrast, the gain peak at 450 cm⁻¹ (13.5 THz) is so wide that gain spectra generated from a different pump wavelength components do overlap. Hence only one mirror pair for each stage in the 450 cm⁻¹ (13.5 THz) Raman cascade is required.

The threshold for operation around 1100 nm is lower than the threshold for 1220 nm. If the Raman gain at 1100 nm happen to be too low to dominate over that at 1220 nm, the resonators for the wavelengths around 1220 nm can be made shorter, so that they encompass only a part of the Raman gain fiber 52, with the 1100 nm resonator encompassing the whole length of the Raman gain fiber 52. Alternatively, part of the 1100 nm resonator may comprise germanosilicate fiber in which gain at 1330 cm⁻¹ (39.8 THz) is negligible but gain at 450 cm⁻¹ (13.5 THz) is significant. By either of these arrangements, a resonating field at 1100 nm is established, which in turn is Raman shifted to 1160 nm via the 450 cm⁻¹ (13.5 THz) gain peak. This intermediate wavelength in turn generates Raman gain around 1220 nm, which has a broad enough spectrum (owing to the large bandwidth of the 450 cm⁻¹ (13.5 THz) gain peak, that the component may utilize the high reflectors provided at 1200 nm, 1220 nm and 1240 nm. These intermediate wavelength also experience gain from the multiwavelength pump radiation around 1050 nm, via the 1330 cm⁻¹ (39.8 THz) Raman gain peak.

Beyond this, cascading continues to 1450 nm, either via the 1330 cm⁻¹ (39.8 THz) peak in one shift, or via the 450 cm⁻¹ (13.5 THz) peak in three shifts via the intermediate wavelengths 1290 nm and 1360 nm. Moreover, 1330 cm⁻¹ (39.8 THz) shifts may occur from 1100 nm to 1290 nm and from 1160 nm to 1360 nm, with one or two 450 cm⁻¹ (13.5 THz) shifts being further necessary to reach the desired 1450 nm output. This use of single step shifting between these pairs of wavelength reduces the threshold of the system, although the source as a whole becomes more complicated as it is necessary to ensure that the reflectivity of the gratings is suitably spaced to utilize the 1330 cm⁻¹ (39.8 THz) shift. If the gratings are not suitably closely matched, the broader band gain at 450 cm⁻¹ (13.5 THz) will still allow shifts to occur, but the increased number of steps in the cascade will lead to a higher threshold.

In this embodiment, the whole of the output power from the amplifier 50 is used for creating Raman gain at the different wavelengths components around 1450 nm. Each of the individual pump wavelength components adds an amount of extra gain to different intermediate wavelength components. Therefore, the power distribution between the output wavelength components can be controlled by varying the pump component powers.

Although the optical source 76 is shown having fiber gratings to provide feedback and resonance at the various intermediate wavelength components, a similar effect may be achieved by the use of individual fiber feedback loops and/or dichroic mirrors coupled with WDM couplers, as shown in the embodiments of Figure 4 and Figure 8.

### SIXTH EMBODIMENT

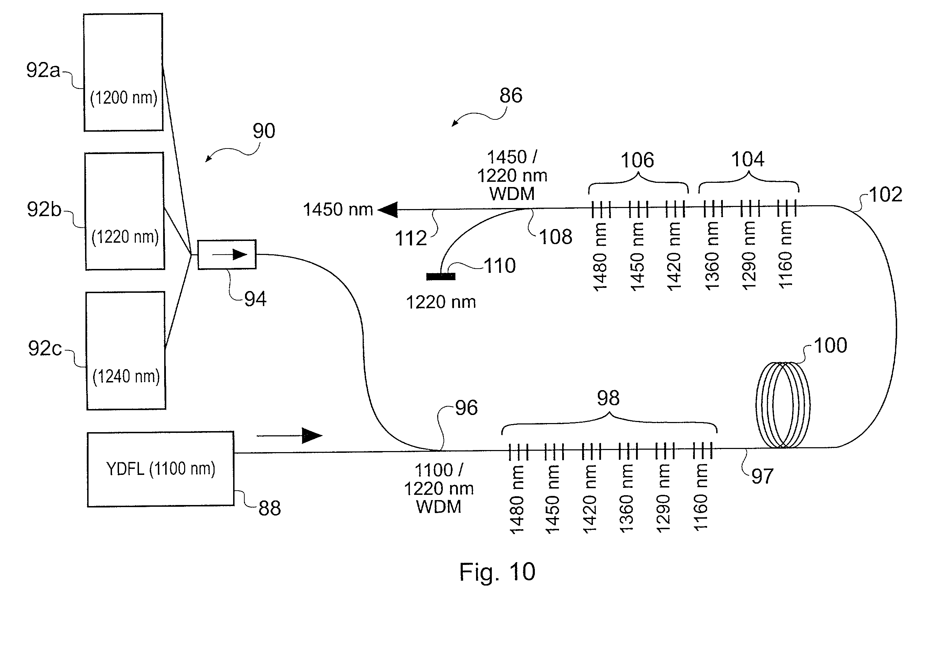

The embodiment of Figure 9 may be modified so that the multiple wavelength components are introduced and amplified at an intermediate wavelength step, rather than comprising the pump radiation introduced at the beginning of the cascade. Figure 10 shows a schematic diagram of an optical source embodying this concept.

Optical source 86 comprises a pump laser 88, in the form of an ytterbium-doped fiber laser, which generates light at 1100 nm. The laser oscillator 88 is fiber-coupled to a first WDM 96 which is configured to couple together light at 1100 nm and also light around 1220 nm.

A seed source 90 is also provided, which comprises three seed laser oscillators 92. Each laser oscillator 92 is configured to generate a different, discrete wavelength around 1220 nm. Laser oscillator 92a generates 1200 nm, laser oscillator 92b generates 1220 nm, and laser oscillator 92c generates 1240 nm. The outputs of each of the laser oscillators 92a is transmitted by optical fiber to an optical combiner/isolator 94, which combines the outputs and produces multiwavelength seed radiation comprising seed wavelength components around 1220 nm. The combiner 94 is coupled to the first WDM coupler 96.

The first WDM coupler 96 is followed by a first section of optical fiber 97 which is provided with six high reflector fiber gratings 98. The gratings 98 are configured to reflect respectively 1160 nm, 1290 nm, 1360 nm, 1420 nm, 1450 nm, 1480 nm.

A length of phosphosilicate fiber 100 comprising the Raman gain medium of the optical source 86 is configured to receive light from the first fiber section 97, and is followed by a second fiber section 102. The length of phosphosilicate fiber 100 may be considered to constitute an optical amplifier. The second fiber section 102 contains three high reflector fiber gratings 104. These are configured to reflect at 1160 nm, 1290 nm and 1360 nm. The second fiber section 102 further contains three partially transmitting fiber grating output couplers 106, configured to be partially reflecting at 1420 nm, 1450 nm, and 1480 nm.

The second fiber section 102 terminates at a second WDM coupler 108 which has a first arm terminating in a highly reflector dichroic mirror with reflectivities centered at 1220 nm, and a second arm forming an output fiber 112. The second WDM coupler 108 is configured to direct light at 1450 nm towards the output arm and light at 1220 nm towards the mirror 110.

The optical source 86 operates as follows: the pump source 88 generates pump radiation at 1100 nm which is transmitted to the WDM coupler 96 along optical fiber. Similarly, the seed laser oscillators 92 each generates respective seed wavelength components, which are transmitted to the combiner 94 by optical fibers. The combined output leaves the combiner 94 and propagates along an optical fiber to the first WDM coupler 96. The first WDM coupler 96 therefore transmits both the pump radiation at 1100 nm and the multiwavelength component seed radiation around 1220 nm into the first fiber section 97. All these radiation components propagate through the high reflector gratings 97 to the Raman gain fiber 100, where the pump radiation at 1100 nm generates gain at 1160 nm via the 450 cm⁻¹ (13.5 THz) Raman gain peak. Radiation at this wavelength builds up in the resonant cavity formed by the pair of 1160 nm gratings. The 1160 radiation in turn creates Raman gain around the 1220 nm also via the 450 cm⁻¹ (13.5 THz) Raman gain peak. The broadband nature of this peak means that the gain produced thereby is also broad, and encompasses all components of the multiwavelength seed radiation input from the seed source 90. Consequently, each of the seed wavelength components at 1200 nm, 1220 nm, 1240 nm are amplified within the Raman gain fiber 100. This amplification is enhanced by the provision of the 1220 nm high reflector mirror 110, which reflects the wavelength components around 1220 nm so that they experience a double pass through the Raman gain fiber 100. The Raman cascade continues from around 1220 nm up to around 1450 nm via the 450 cm⁻¹ (13.5 THz) gain peak, so that intermediate wavelengths around 1290 nm and 1360 nm are generated. The three high reflectors 98 and their corresponding output couplers 106 at the wavelengths 1420 nm, 1450 nm and 1480 nm ensure that three output wavelength components are generated, to give a multiwavelength final optical output, which leaves the cavity through output fiber 112.

The power distribution between the various wavelength components in the final optical output is determined by the distribution of powers in the multiwavelength seed beam around 1220 nm. Therefore, modification of the output powers of each of the seed laser oscillators 92 controls the power distribution of the final output beam.

In order that sufficient gain is achieved around 1220 nm to sufficiently amplify the incoming seed wavelength components, the grating pair around 1360 nm should have a reflectivity which is not offset from the gratings around 1160 nm by a wavelength shift corresponding to exactly 1330 cm⁻¹ (39.8 THz). This inhibits Raman shifting directly from 1160 nm to 1360 nm, arising from the 1330 cm⁻¹ (39.8 THz) gain peak, from occurring, which would deplete the desired shift from 1160 nm to 1220 nm via the 450 cm⁻¹ (13.5 THz) gain peak. This could potentially cause an insufficiently high gain around 1220 nm to be generated.

### MODIFICATIONS

Each of the above embodiments may be modified to include one or more features from other embodiments. For example, combinations of fiber loops, gratings and dichroic mirrors may be utilized to provide feedback at relevant wavelengths. The pump source in each case can comprise any number of laser oscillators, according to the number of wavelength components required in the final output of the optical source. Various kinds of oscillator may be combined in single pump source, as such an arrangement may best give the desired degree of wavelength and power selectivity. Moreover, the present invention is not limited to the generation of multiwavelength light around 1450 nm. The concept of introducing a plurality of discrete spaced-apart wavelength components at an early stage in a Raman cascade to give a multiwavelength output with scope for shaping and tuning of that output can be applied to the generation of any wavelength. The 1330 cm⁻¹ (39.8 THz) and 450 cm⁻¹ (13.5 THz) Raman shifts in phosphosilicate fiber may be used to achieve any output wavelength, according to the choice of pump wavelength. Hence wavelengths other than 1450 nm can be generated by using pump sources differing from those used in the embodiments described above. Similarly, other types of optical fiber may be used in place of phosphosilicate fiber. For example, the broad 450 cm⁻¹ (13.5 THz) peak in germanosilicate may be useful for some applications. Of course, it will be necessary to provide gratings, couplers, mirrors, and other components configured for operation at the intermediate wavelengths generated in the particular Raman cascade used.

### REFERENCES

- 1.: WO 00/05622
- 2.: US 6,122,298
- 3.: EP 0,984,532
- 4.: WO 96/37936

## Claims

1. A source of optical radiation comprising:
a pump source operable to provide pump radiation comprising a plurality of pump wavelength components having respective wavelengths; and
an optical cavity comprising an optical fiber Raman gain medium arranged to receive the pump radiation and deliver an optical output comprising a plurality of output wavelength components, respective output wavelength component being derived from respective pump wavelength components by one or more Raman shifts.

2. A source of optical radiation according to claim 1, in which:
the optical fiber Raman gain medium comprises material having a Raman gain spectrum with a plurality of peaks; and
Raman shifts corresponding to at least two of the peaks are used to derive the output wavelength components from the pump wavelength components.

3. A source of optical radiation according to claim 1 or claim 2, in which the optical cavity is configured:
to resonate a plurality of intermediate wavelength components, each intermediate wavelength component being separated from at least one pump wavelength component and from at least one output wavelength component by one or more Raman shifts; and
to pass the output wavelength components through the optical fiber Raman gain medium more than once.

4. A source of optical radiation according to claim 3, in which the optical fiber Raman gain medium is arranged in a first loop configured:
to receive the pump wavelength components;
to circulate the intermediate wavelength components a plurality of times; and
to deliver the output wavelength components to form the optical output.

5. A source of optical radiation according to claim 4, in which the optical fiber Raman gain medium is further arranged in a second loop so as to receive the output wavelength components from the first loop and configured to circulate the output wavelength components before delivering them to form the optical output.

6. An optical source according to claim 4, in which the first loop is configured to circulate the output wavelength components before delivering them to form the optical output.

7. An optical source according to claim 3, in which the optical cavity comprises at least one pair of reflector elements disposed about the Raman gain medium, and operable to:
reflect one or more intermediate wavelength components such that the one or more intermediate wavelength components experience multiple passes through the Raman gain medium; and
reflect one or more output wavelength components such that the one or more output wavelength components experience multiple passes through the Raman gain medium.

8. An optical source according to claim 7, in which the reflector elements comprise optical gratings written into optical fiber.

9. An optical source according to claim 7, in which the reflector elements comprise dichroic mirrors provided at ends of sections of optical fiber coupled to the optical cavity by optical fiber couplers.

10. A source of optical radiation according to any preceding claim, in which the pump source comprises:
a plurality of lasers operable to generate outputs of respective wavelengths and powers; and
an optical coupler configured to receive and combine the outputs of the lasers to form the pump radiation.

11. A source of optical radiation according to claim 10, in which the pump source further comprises an optical amplifier arranged after the optical coupler to amplify the wavelength components jointly.

12. A source of optical radiation according to claim 11, further comprising an optical isolator arranged between the optical coupler and the optical amplifier.

13. A source of optical radiation according to any preceding claim, in which the optical fiber Raman gain medium comprises silica doped with phosphorus.

14. A source of optical radiation comprising:
a pump source operable to provide pump radiation comprising a pump wavelength component;
a seed source operable to provide seed radiation comprising a plurality of seed wavelength components having respective wavelengths; and
an optical cavity comprising an optical fiber Raman gain medium arranged to receive the pump radiation and the seed radiation and to deliver an optical output comprising a plurality of output wavelength components, respective output wavelength components being derived from the pump wavelength component by one or more Raman shifts, each Raman shift producing an intermediate wavelength component, some of which correspond to respective seed wavelength components.

15. A source of optical radiation according to claim 14, in which the seed source comprises:
a plurality of lasers operable to generate outputs of respective wavelengths and powers; and
an optical coupler configured to receive and combine the outputs of the lasers to form the seed radiation.

16. A source of optical radiation according to claim 15, in which the pump source further comprises an optical amplifier arranged after the optical coupler to amplify the wavelength components jointly.

17. A source of optical radiation according to claim 16, further comprising an optical isolator arranged between the optical coupler and the optical amplifier.

18. A source of optical radiation according to any one of claims 14 to 17, in which the optical fiber Raman gain medium comprises silica doped with phosphorus.

19. A method of generating optical radiation comprising a plurality of output wavelength components having respective wavelengths, the method comprising:
generating pump radiation comprising a plurality of pump radiation components having respective wavelengths;
introducing the pump radiation into an optical fiber Raman gain medium;
using one or more Raman shifts in the Raman gain medium to generate respective output wavelength components from respective pump wavelength components; and
extracting at least a portion of respective output wavelength components from the Raman gain medium.

20. A method of generating optical radiation comprising a plurality of output wavelength components having respective wavelengths, the method comprising:
generating pump radiation comprising a pump wavelength component;
generating seed radiation comprising a plurality of seed radiation components having respective wavelengths;
introducing the pump radiation and the seed radiation into an optical fiber Raman gain medium;
using one or more Raman shifts in the Raman gain medium to generate from the pump wavelength component a plurality of intermediate wavelength components, some of which correspond to respective seed wavelength components, and using one or more Raman shifts in the Raman gain medium to generate respective output wavelength components from respective intermediate wavelength components; and
extracting at least a portion of respective output wavelength components from the Raman gain medium.
